Europäisches Patentamt

European Patent Office

Office européen des brevets

(11) Veröffentlichungsnummer: **0 272 529 B1**

(12) **EUROPÄISCHE PATENTSCHRIFT**

(45) Veröffentlichungstag der Patentschrift: **04.03.92**

(21) Anmeldenummer: **87118073.3**

(22) Anmeldetag: **07.12.87**

Teilanmeldung 91101087.4 eingereicht am 07/12/87.

(51) Int. Cl.⁵: **B65G 1/02, B65D 90/24**

(54) **Lager mit Auffangvolumen für Flüssigkeiten.**

(30) Priorität: **08.12.86 DE 8632864 U**
**27.03.87 DE 8704568 U**
**27.08.87 DE 8711634 U**
**14.10.87 DE 8713805 U**
**10.11.87 DE 8714940 U**

(43) Veröffentlichungstag der Anmeldung:
**29.06.88 Patentblatt 88/26**

(45) Bekanntmachung des Hinweises auf die
Patenterteilung:
**04.03.92 Patentblatt 92/10**

(84) Benannte Vertragsstaaten:
**AT BE CH DE FR GB IT LI LU NL SE**

(56) Entgegenhaltungen:
**EP-A- 0 161 676        CH-A- 595 261**
**CH-A- 626 592        DE-A- 2 418 882**
**DE-U- 8 535 954      DE-U- 8 610 910**
**US-A- 4 604 838**

(73) Patentinhaber: **HOFFMANN INDUSTRIEBAU GMBH**
**Triftenstrasse 115**
**W-4937 Lage/Lippe(DE)**

(72) Erfinder: **Becher, Dietmar, Dipl.-Ing.**
**Alter Schulweg 17a**
**W-4937 Lage(DE)**

(74) Vertreter: **TER MEER - MÜLLER - STEINMEI-STER & PARTNER**
**Artur-Ladebeck-Strasse 51**
**W-4800 Bielefeld 1(DE)**

# Beschreibung

Die Erfindung betrifft ein Lager mit einem Auffangvolumen für Flüssigkeit.

Durch das Auffangvolumen eines solchen Lagers soll verhindert werden, daß Leckflüssigkeit aus eingelagerten Flüssigkeitsbehältern unkontrolliert in die Umwelt gelangt oder daß, beispielsweise bei einem Brand in einem Chemikalienlager, umweltgefährdende Chemikalien mit dem Löschwasser fortgespült werden und in den Boden einsickern oder zu einer Gewässerverunreinigung führen.

In dem deutschen Gebrauchsmuster G 85 35 954 wird ein Lagercontainer beschrieben, bei dem das Auffangvolumen durch eine in den Container integrierte, durch einen Gitterrost abgedeckte Auffangwanne gebildet wird.

Bei derartigen Containern kann jedoch die Gefahr einer Verseuchung des Bodens oder des Grundwassers nicht ausgeschlossen werden, wenn beispielsweise die Wand eines eingelagerten Fasses durch die Gabel eines Gabelstaplers oder dergleichen durchstoßen wird und der Inhalt des Fasses infolge des statischen Flüssigkeitsdruckes strahlförmig austritt und über den Rand der Auffangwanne hinausspritzt. Aufgrund der begrenzten flächenmäßigen Ausdehnung der Auffangwanne und des relativ geringen Auffangvolumens kann auch das bei der Brandbekämpfung anfallende Löschwasser nicht aufgefangen werden.

Ein zufriedenstellender Gewässerschutz kann daher bisher nur durch aufwendige und teure bauliche Maßnahmen erreicht werden, indem beispielsweise der gesamte Boden eines Lagergebäudes als flüssigkeitsdicht versiegelte Betonwanne ausgebildet wird.

In der Druckschrift CH-A-595 261 wird ein Umschlagplatz für umweltgefährdende Flüssigkeiten beschrieben, der durch mehrere in den Boden eingelassene und flüssigkeitsdicht aneinander angrenzende Betonwannen gebildet wird, die Jeweils durch einen Gitterrost abgedeckt sind. Die mittlere Betonwanne ist durch Schienenfahrzeuge wie beispielsweise Zisternenwagen befahrbar. Wenn beim Befüllen oder Entleeren der Zisternenwagen Flüssigkeit verschüttet wird, so kann diese in den angrenzenden Auffangwannen aufgefangen werden.

In EP-A-0 161 676 wird eine Vorrichtung zum Auffangen von abtropfenden Schmutzwässern und Schneeresten unter Kraftfahrzeugen in Garagen beschrieben. Diese Vorrichtung besteht aus einer auf den Erdboden aufzulegenden, flachen, vom Kraftfahrzeug zu befahrenden Sammelwanne mit einem Bodenteil und einer umlaufenden, vom Kraftfahrzeug überfahrbaren Randerhöhung.

Der Erfindung liegt die Aufgabe zugrunde, ein Lager mit Lager-Containern zur Aufnahme von Flüssigkeitsbehältern zu schaffen, das sich einfach installieren läßt und es dennoch gestattet, die bei einem Leck aus den eingelagerten Flüssigkeitsbehältern herausspritzende Flüssigkeit zuverlässig aufzufangen.

Diese Aufgabe wird erfindungsgemäß mit den in Anspruch 1 angegebenen Merkmalen gelöst.

An der offenen, zum Be- und Entladen zugänglichen Seite des Lager-Containers ist eine flüssigkeitsdicht an dessen Auffangwanne anschließende, durch einen befahrbaren Rost abgedeckte Spritzschutzwanne angeordnet, die an ihrer von dem Lager-Container abgewandten Seite mit einer Auffahrrampe für fördertechnische Geräte wie Gabelstapler oder dergleichen versehen ist.

Die mit der Auffahrrampe und dem befahrbaren Rost versehene Spritzschutzwanne bietet einerseits die Gewähr, daß auch die aus einem Leck herausspritzende Flüssigkeit aufgefangen wird, ermöglicht es andererseits jedoch, mit dem Gabelstapler bis unmittelbar an die Lagerebenen des Containers heranzufahren. Die Leckflüssigkeit läuft durch den Rost in das Auffangvolumen der Spritzschutzwanne ab, so daß der Rost auch unmittelbar nach dem Auftreten eines Lecks befahren oder betreten werden kann, ohne daß die Leckflüssigkeit in der Umgebung verteilt wird.

Durch einen an die Abmessungen des Lager-Containers angepaßten containerartigen Überbau in Form eines Rahmens mit geschlossenen Dach- und Seitenflächen wird erreicht, daß bei der Aufstellung im Freien ein Eindringen von Regenwasser in die Spritzschutzwanne verhindert wird.

In einer Ausführungsform bilden die Spritzschutzwanne und der Überbau einen gesonderten Spritzschutzcontainer, der nachträglich vor den Lager-Container vorgesetzt und dicht an diesen angeschlossen werden kann. Die Höhe des Spritzschutzcontainers kann dabei etwas größer sein als die Höhe des eigentlichen Lagercontainers, damit sich die Gabel eines Gabelstaplers ungehindert so weit anheben läßt, daß auch die oberste Lagerebene des Lagers bedient werden kann. In einer bevorzugten Ausführungsform ist der Spritzschutzcontainer Jedoch auch in der Höhe an den Lager-Container angepaßt.

In einer anderen Ausführungsform sind die Spritzschutzwanne und der Überbau unmittelbar in die Rahmenkonstruktion des eigentlichen Lagercontainers integriert. Diese Lösung ist besonders in den Fällen vorteilhaft, in denen der Lagercontainer von einer Seite her zugänglich ist und eine verhältnismäßig geringe Tiefe, beispielsweise entsprechend der Länge einer einzigen Palette aufweist. Der Lagercontainer und die Spritzschutzwanne mit Überbau bilden dann eine transportfähige Konstruktionseinheit, die in ihren Abmessungen etwa einem üblichen See- oder Binnencontainer entspricht .

Weitere Ausgestaltungen der Erfindung ergeben sich aus den abhängigen Patentansprüchen.

Im folgenden wird ein bevorzugtes Ausführungsbeispiel der Erfindung anhand der Zeichnungen näher erläutert.

Es zeigen:

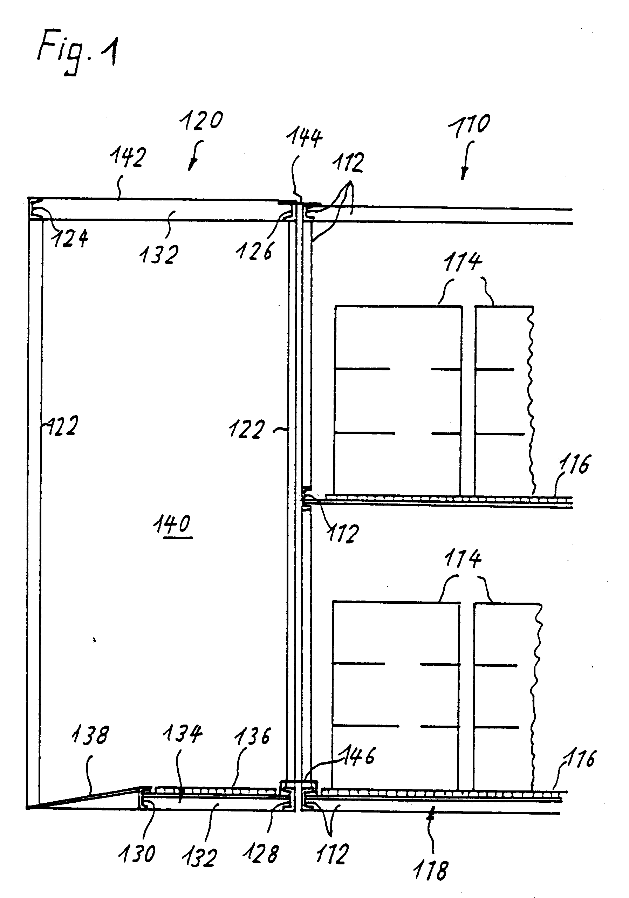

Fig. 1     einen Teilschnitt durch einen als Faßlager genutzten Lagercontainer mit vorgesetztem Spritzschutz-Container; und

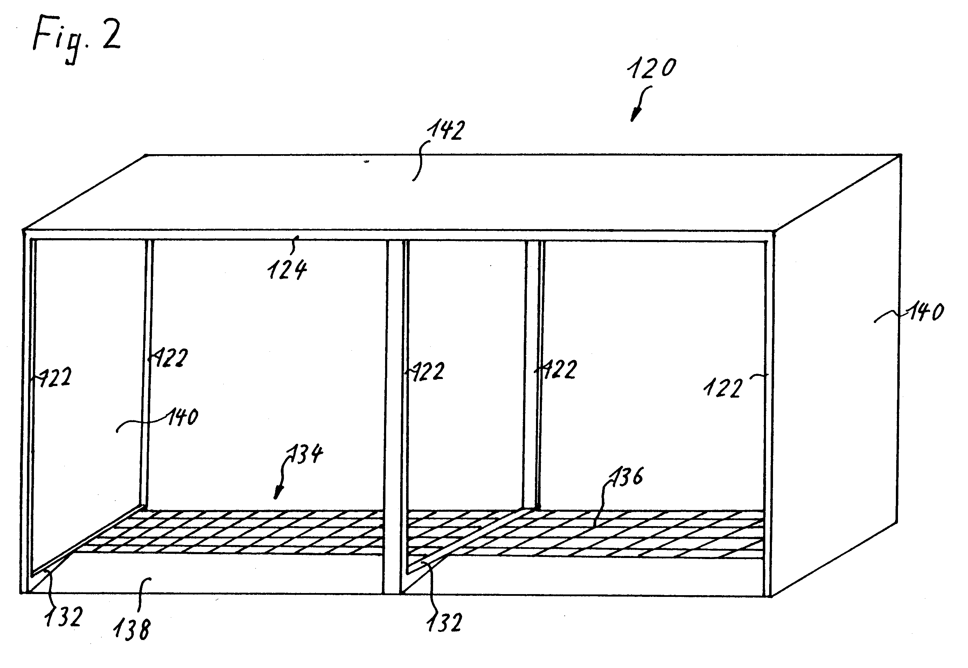

Fig. 2     eine perspektivische Ansicht des Spritzschutz-Containers.

Ein Lagercontainer 110 wird durch eine mehrzellige Rahmenkonstruktion aus Stahlprofilen 112 gebildet und weist zwei Lagerebenen für Fässer 114 auf. Der Boden jeder Lagerebene wird durch einen Gitterrost 116 gebildet. In den Boden des Lagercontainers ist eine Auffangwanne 118 für Leckflüssigkeit integriert.

Vor der offenen Längsseite des Lagercontainers 110 ist ein Spritzschutz-Container 120 angeordnet, der ebenfalls durch eine Stahl-Rahmenkonstruktion aus vertikalen Profilen 122, längsverlaufenden horizontalen Profilen 124,126, 123,130 und querverlaufenden horizontalen Profilen 132 gebildet wird. Das längsverlaufende untere Profil 130 ist gegenüber dem oberen Profil 114 um etwa 1/3 der Tiefe des Spritzschutz-Containers zurückgesetzt und bildet mit dem gegenüberliegenden Profil 128 und den querverlaufenden Profilen 132 eine Spritzschutzwanne 134 für aus dem Lagercontainer 110 herausspritzende Leckflüssigkeit. Die Spritzschutzwanne 134 ist durch einen befahrbaren Gitterrost 136 abgedeckt und längs des vorderen Randes mit einer Auffahrrampe 138 versehen. die sich vom unteren Längsrand des Spritzschutz-Containers zur Oberkante der Spritzschutzwanne erstreckt. Die Auffahrrampe 138 ist mit den querverlaufenden Profilen 132 der Rahmenkonstruktion verschweißt. Der Gitterrost 136 ist derart aufAbsätzen der die Auffangwanne 134 begrenzenden Profile abgestützt. daß seine obere Oberfläche mit dem oberen Rand der Spritzschutzwanne fluchtet. Wahlweise können die Auffahrrampe 138 und der Gitterrost 136 durch zusätzliche Rippen versteift oder abgestützt sein, so daß hohe Lasten aufgenommen werden können.

Durch Verkleidungen an den Stirnwänden 140 und durch eine über den vorderen Rand der Spritzschutzwanne hinausreichende Dachfläche 142 des Spritzschutz-Containers wird ein Wetterschutz gebildet, der das Eindringen von Regenwasser in die Spritzschutzwanne verhindert. Durch die Stirnwandverkleidungen wird zugleich verhindert. daß die Leckflüssigkeit über die stirnseitigen Ränder der Spritzschutzwanne hinausspritzt. Die Dachfläche 142 kann ein Gefälle zu dem Lagercontainer 110 aufweisen, so daß das Regenwasser auf das Dach des Lagercontainers abgeleitet wird, der in üblicher Weise mit einem nicht gezeigten Regenwasserablauf versehen ist. Die Dachfuge zwischen den Containern 110,120 ist durch ein Blech 144 oder eine Folie abgedeckt. Ein umgekehrt U-förmiges Tropfblech 146 greift über die parallel nebeneinanderliegenden Profile 128, 112 am Boden des Spritzschutz-Containers und des Lagercontainers und verhindert ein Einsickern von Leckflüssigkeit in die Fuge zwischen den beiden Containern. Das Tropfblech 146 ist lösbar auf den Rändern der Auffangwannen 118,134 befestigt oder dicht aufgeschweißt.

Gemäß Figur 7 ist der Spritzschutz-Container 120 durch die senkrechten Profile 122 in zwei Felder unterteilt. Wahlweise kann der Spritzschutz-Container jedoch auch nur ein einziges Feld oder mehr als zwei Felder aufweisen. Das Raster der Rahmenkonstruktion des Spritzschutz-Containers ist an das Raster der Rahmenkonstruktion des Lagercontainers angepaßt, weist jedoch keine längsverlaufenden Profile in halber Höhe auf, damit ein ungehinderter Zugang mit einem Gabelstapler oder dergleichen gewährleistet ist.

Im gezeigten Beispiel handelt es sich bei dem Lagercontainer 110 um einen von beiden Längsseiten her bedienbaren Container, dessen Tiefe etwa dem doppelten der Tiefe des Spritzschutz-Containers 120 entspricht. An der dem Spritzschutz-Container 120 gegenüberliegenden Längsseite des Lagercontainers 110 kann ein weiterer Spritzschutz-Container angeordnet sein.

Der Spritzschutz-Container 120 kann wahlweise auch an einem nur von einer Längsseite her bedienbaren Lagercontainer angeordnet sein, dessen Tiefe im wesentlichen mit der Tiefe des Spritzschutz-Containers übereinstimmt.

Die verschiedenen Ausführungsformen der Lagercontainer und die Spritzschutz-Container fügen sich so in ein einheitliches Raster ein und können in sehr variabler Weise zu einem komplexen Containerlager kombiniert werden.

In einer nicht gezeigten Abwandlung des be-schriebenen Ausführungsbeispiels sind die Rah-menkonstruktionen des Lagercontainers und des Spritzschutz-Containers zu einer einheitlichen Rah-menkonstruktion mit durchgehenden querverlaufen-den Profilen zusammengefaßt. In diesem Fall können auch durchgehende Stirnwand- und Dachverkleidungen vorgesehen sein, und auch für die Auffangwanne 118 am Boden des Lagercontainers und die Spritzschutzwanne 134 können durchgehende Gitterroste vorgesehen sein.

## Patentansprüche

1.   Lager für Flüssigkeitsbehälter wie Fässer oder dergleichen, mit einem an einer Längsseite offenen Lager-Container (110), in dessen unterem Teil eine die unterste Lagerebene unterfangende Auffangwanne (118) für Leckflüssigkeit vorgesehen ist, dadurch **gekennzeichnet,** daß an der offenen Seite des Lager-Containers (110) eine flüssigkeitsdicht an dessen Auffangwanne (118) anschließende, durch einen befahrbaren Rost (136) abgedeckte Spritzschutzwanne (134) angeordnet ist, die an ihrer von dem Lager-Container (110) abgewandten Seite mit einer Auffahrrampe (138) für fördertechnische Geräte wie Gabelstapler oder dergleichen versehen ist, und daß die Spritzschutzwanne (134) einen an die Abmessungen des Lager-Containers (110) angepaßten containerartigen Überbau (120) mit einer kastenförmigen Rahmenkonstruktion aus Stahlprofilen (122,124,126,128 130) und mit geschlossenen Stirn- und Dachflächen (140,142) aufweist.

2. Lager nach Anspruch 1, dadurch **gekennzeichnet**, daß die Spritzschutzwanne (134) mit der Auffahrrampe (138) den Boden eines gesonderten, an beiden Längsseiten offenen Spritzschutz-Containers (120) bildet, der den containerartigen Überbau darstellt und der nachträglich vor den Lager-Container (110) vorsetzbar und dicht an diesen anschließbar ist.

3. Lager nach Anspruch 2, dadurch **gekennzeichnet,** daß der Spritzschutz-Container (120) die gleiche Länge und die gleiche Höhe wie der Lager-Container (110) und eine Tiefe entsprechend etwa der ganzen oder halben Tiefe des Lager-Containers (110) aufweist.

4. Lager nach Anspruch 1, dadurch **gekennzeichnet,** daß die Spritzschutzwanne (134), die Auffahrrampe (138) und der Überbau in den Lager-Container (110) integriert sind.

5. Lager nach Anspruch 4, dadurch **gekennzeichnet,** daß die Spritzschutzwanne (134) und die Auffahrrampe (138) zusammen etwa die halbe Tiefe des Lager-Containers (110) einnehmen, und daß der Lager-Container an seiner der Auffahrrampe (138) entgegengesetzten Längsseite geschlossen ist.

6. Lager nach Anspruch 5, dadurch **gekennzeichnet,** daß der Lager-Container (110) eine fachwerkartige Rahmenkonstruktion aus Stahlprofilen aufweist, die in der außerhalb des Grundrisses der Spritzschutzwanne (134) und der Auffahrrampe (138) gelegenen Hälfte des Containers mehrere übereinanderliegende Lagerebenen bildet.

## Claims

1. Store for fluid containers such as barrels or the like, with a store container (110) which is open on one longitudinal side and in the lower part of which there is provided a collector tank (118) for waste fluid which is below the lowest store plane, characterised in that on the open side of the store container (110) there is disposed a spray protection tank (134) which abuts the collector tank (118) of the container (110) in a leak-proof manner and is covered by a grate (136) which can be travelled over, the spray protection tank (134) being provided on its side facing away from the store container (110) with a ramp (138) for mechanical conveying apparatus such as forklift trucks and the like; and in that the spray protection tank (134) comprises a container-like superstructure (120), which is adapted to the dimensions of the store container (110), with a box-shaped frame construction of profiled steel sections (122, 124, 126, 128, 130) and with closed end and roof faces (140, 142).

2. Store according to claim 1, characterised in that the spray protection tank (134) forms together with the ramp (138) the base of a separate spray protection container (120) which is open on both longitudinal sides and represents the container-like superstructure and can subsequently be disposed in front of the store container (110) and be connected thereto in a leak-tight manner.

3. Store according to claim 2, characterised in that the spray protection container (120) has the same length and the same height as the store container (110) and a depth which corresponds approximately to the whole depth or half the depth of the store container (110).

4. Store according to claim 1, characterised in that the spray protection tank (134), the ramp (138) and the superstructure are integrated in the store container (110).

5. Store according to claim 4, characterised in that the spray protection tank (134) and the ramp (138) together occupy approximately half the depth of the store container (110) and in that the store container is closed on its longitudinal side which is opposite the ramp (138).

6. Store according to claim 5, characterised in that the store container (110) comprises a truss-like frame construction of profiled steel sections which forms a plurality of superimposed store planes in the container half which is located outside the base of the spray protection tank (134) and the ramp (138).

**Revendications**

1. Dispositif de stockage pour réservoirs de liquide tels que des tonneaux ou analogues, équipé d'un conteneur de stockage (110) ouvert sur un côté longitudinal, dans la partie inférieure duquel est prévue une cuve collectrice (118) pour des fuites de liquide, soutenant le plan de stockage inférieur, caractérisé en ce que sur le côté ouvert du conteneur de stockage (110) est disposée une cuve de protection contre des projections (134) recouverte par une grille praticable (136) se raccordant de façon étanche aux liquides à la cuve collectrice (118) de celui-ci, qui est munie sur son côté éloigné du conteneur de stockage (110) d'une rampe d'accès (138) pour des appareils de manutention tels qu'élévateurs à fourche ou analogues, et en ce que la cuve de protection contre les projections (134) comporte une superstructure (120) en forme de conteneur adaptée aux dimensions du conteneur de stockage (110) avec une structure en forme de caisson en profilés d'acier (112, 124, 126, 128, 130) et avec des surfaces frontales et supérieures fermées (140, 142).

2. Dispositif de stockage selon la revendication 1, caractérisé en ce que la cuve de protection contre les projections (134) avec la rampe d'accès (138) forme le fond d'un conteneur de protection contre les projections (120) particulier, ouvert sur les deux côtés longitudinaux qui constituent la superstructure en forme de conteneur et qui peut être disposée après coup devant le conteneur de stockage (110) et peut être raccordée de façon étanche à celui-ci.

3. Dispositif dc stockage selon la revendication 2, caractérisé en ce que le conteneur de protection contre les projections (120) présente la même longueur et la même hauteur que le conteneur de stockage (110) et une profondeur correspondant approximativement à la totalité ou à la moitié de la profondeur du conteneur de stockage (110).

4. Dispositif de stockage selon la revendication 1, caractérisé en ce que la cuve de protection contre les projections (134), la rampe d'accès (138) et la superstructure sont intégrées dans le conteneur de stockage (110).

5. Dispositif de stockage selon la revendication 4, caractérisé en ce que la cuve de protection contre les projections (134) et la rampe d'accès (138) occupent conjointement environ la moitié de la profondeur du conteneur de stockage (110), et en ce que le conteneur de stockage est fermé sur son côté longitudinal opposé à la rampe d'accès (138).

6. Dispositif de stockage selon la revendication 5, caractérisé en ce que le conteneur de stockage (110) présente une structure en forme de treillis en profilés d'acier, qui forme, dans la moitié du conteneur disposée à l'extérieur de la projection en plan de la cuve de protection contre les projections (134) et de la rampe d'accès (138), plusieurs plans de stockage superposés.

Fig. 1

Fig. 2

120

142

124

140

122

122

122

122

122

134

136

132

138

132

EP 0 272 529 B1